# FASCICULE DE BREVET EUROPEEN

(11) **EP 3 311 088 B1**
(45) Date de publication et mention de la délivrance du brevet: **21.08.2019**
(21) Numéro de dépôt: 16736532.9
(22) Date de dépôt: 17.06.2016
(51) Int. Cl.: C03C 25/26, C03C 25/64, F27B 9/10, F27B 9/30, F27D 17/00, C03B 37/04, B29C 35/06, D04H 1/645, B29C 35/04, B29C 67/24, D04H 1/4209, D04H 1/4218, F26B 3/06, F26B 25/00, F26B 13/10, F26B 23/00

(54) **CAISSON POUR ETUVE DE RETICULATION ET ETUVE DE RETICULATION D'UN MATELAS CONTINU DE FIBRES MINERALES OU VEGETALES**
GEHÄUSE FÜR AUSHÄRTUNGSOFEN UND AUSHÄRTUNGSOFEN ZUR VERNETZUNG EINER KONTINUIERLICHEN MATTE AUS ANORGANISCHEN ODER PFLANZLICHEN FASERN
HOUSING FOR CURING OVEN AND CURING OVEN FOR CROSSLINKING A CONTINUOUS MAT OF INORGANIC OR PLANT FIBRES

(30) Priorité: 19.06.2015 FR 1555612
(43) Date de publication de la demande: 25.04.2018
(73) Titulaire: Saint-Gobain Isover, 92400 Courbevoie (FR)
(72) Inventeur: BAUDOUIN, Bernard, 60650 Saint Paul (FR); NGUYEN, Christine, 75014 Paris (FR)
(74) Mandataire: Saint-Gobain Recherche
(86) Numéro de dépôt international: PCT/FR2016/051477
(87) Numéro de publication internationale: WO 2016/203170

(56) Documents cités:
- FR-A1- 2 984 371
- US-A- 2 997 096
- US-A- 4 263 007

## Description

L'invention se rapporte au domaine des étuves de réticulation d'un matelas continu de fibres minérales ou végétales, en particulier de laine minérale, de type laine de verre ou de roche. Ces matelas sont destinés à être découpés pour former ensuite par exemple des panneaux ou rouleaux d'isolation thermique et/ou acoustique.

La fabrication de tels matelas de fibres isolantes comprend primairement le fibrage et le dépôt de fibres sur un convoyeur ou transporteur mobile perforé. L'amas de fibres néoformé est plaqué sur le convoyeur à l'aide de caissons d'aspiration agencés sous le transporteur sur lequel elles sont déposées. Lors du fibrage, un liant est pulvérisé à l'état de solution ou suspension dans un liquide volatil tel que l'eau sur les fibres étirées, ce liant ayant des propriétés d'adhésivité et comprenant d'habitude une matière durcissable à chaud, comme une résine thermodurcissable.

La couche primaire de fibres relativement lâches sur le convoyeur collecteur est ensuite transférée à un dispositif de chauffage appelé communément dans le domaine en cause étuve de réticulation. Le matelas continu de fibres traverse l'étuve sur toute sa longueur, grâce à des convoyeurs en regard l'un au-dessus de l'autre, pressant le matelas entre eux, et dont la distance d'écartement est réglable. Un tel matelas présente ainsi une densité plus ou moins importante en fonction du degré de la compression exercée par les deux convoyeurs dans l'étuve.

Pendant son passage dans l'étuve, le matelas est simultanément asséché et soumis à un traitement thermique spécifique qui provoque la polymérisation (ou « durcissement ») de la résine thermodurcissable du liant présent à la surface des fibres.

Le mode opératoire utilisé pour provoquer le durcissement du liant consiste à faire passer de l'air chauffé à travers toute l'épaisseur du matelas, de telle façon que le liant présent dans toute l'épaisseur du matelas soit lui-même porté progressivement à une température supérieure à sa température de durcissement. A cette fin, l'étuve de réticulation est composée d'une enceinte constituant une chambre fermée dans laquelle sont disposés une série de caissons alimentés par des brûleurs en air chaud mis en circulation par des ventilateurs. Chaque caisson définit ainsi une zone indépendante de chauffage, dans laquelle sont réglées des conditions spécifiques de chauffage. Les caissons sont séparés par des parois présentant des ouvertures pour le matelas et les convoyeurs supérieurs et inférieurs. L'utilisation d'une pluralité de caissons permet avantageusement une élévation graduée et mieux contrôlée de la température du matelas tout au long de sa traversée de l'étuve et évite l'apparition de points chauds dus à un chauffage localement trop important, ou alternativement la présence au sein du matelas de zones dans lesquelles le liant n'aurait pas été entièrement polymérisé. Une étuve utilisée dans le procédé de fabrication de laine minérale comprend ainsi très couramment une multitude de caissons (par exemple entre 2 et 10), ainsi que des moyens connus permettant d'établir des conditions thermiques variables et indépendantes au sein de chaque caisson tel que dans US2997096.

A l'heure actuelle, les étuves utilisées consomment cependant une quantité importante d'énergie. Un but de la présente invention est de réduire la consommation d'énergie de telles étuves.

A cet effet, un objet de l'invention est une étuve de réticulation d'un matelas continu de fibres minérales ou végétales, comprenant :
- une pluralité de caissons de chauffage traversés successivement par ledit matelas de fibres, comprenant chacun un compartiment central délimité par des parois latérales, supérieure et inférieure, ledit compartiment comprenant des orifices d'entrée et de sortie d'un flux de gaz chaud situés de part et d'autre du matelas de fibres, de telle façon qu'après traversée du matelas par le flux de gaz chaud, le liant soit progressivement amené à une température supérieure à sa température de durcissement,
- au moins un convoyeur de transport du matelas à travers les différents caissons, ledit convoyeur étant perméable au flux de gaz chaud traversant ledit matelas,
- une enveloppe d'isolation extérieure entourant ladite pluralité de caisson, ladite étuve étant caractérisée en ce qu'au moins l'un desdits caissons comprend en outre, entre l'enveloppe d'isolation extérieure et ledit compartiment central, un dispositif intégré de chauffage et de recirculation de gaz chaud comprenant :
   - au moins une turbine radiale montée horizontalement sur la paroi supérieure ou la paroi inférieure du compartiment central et dont l'axe de rotation est disposé verticalement, ladite turbine aspirant le gaz chaud selon ledit axe au travers d'un orifice de sortie du gaz du compartiment central après traversée du matelas, et le rejetant radialement vers des moyens de recirculation,
   - des moyens de recirculation du gaz chaud en sortie de la turbine radiale jusqu'à l'orifice d'entrée du gaz dans le compartiment, lesdits moyens de recirculation étant disposés au moins pour partie sur au moins une paroi latérale du compartiment,
   - au moins un moyen de chauffage du gaz circulant dans ledit caisson.

Une telle étuve permet d'avoir un dispositif compact combinant chauffage, soufflage et conduits d'alimentation réduits au strict minimum, minimisant ainsi les pertes de charge et améliorant l'efficacité du soufflage. Une telle configuration permet notamment une économie sensible de l'énergie nécessaire à la fabrication de la laine minérale.

Qui plus est, grâce à sa compacité, le dispositif peut être inclus dans l'enveloppe en matériau isolant prévue autour du caisson, de façon à minimiser les pertes de chaleur dans les conduits et à chauffer les conduits par radiation du caisson.

Suivant des modes particuliers de réalisation, l'étuve inclut l'une ou plusieurs des caractéristiques suivantes prise(s) isolément ou suivant toutes les combinaisons techniquement possibles :
- Le ou les orifices de sortie du flux de gaz chaud sont pratiqués dans la paroi supérieure du compartiment central et la ou les turbines sont montées sur la paroi supérieure du compartiment central, l'entrée d'une turbine étant placée en regard d'un orifice de sortie du gaz chaud.
- Le ou les orifices de sortie du flux de gaz chaud sont pratiqués dans la paroi inférieure du compartiment central et la ou les turbines sont montées sur la paroi inférieure du compartiment central, l'entrée d'une turbine étant agencée en regard d'un orifice de sortie du gaz chaud.
- Le moyen de chauffage est intégré ou débouche dans ledit caisson.
- Le moyen de chauffage du gaz est placé dans le compartiment central entre le matelas de fibres et l'orifice de sortie du gaz chaud.
- Le moyen de chauffage du gaz est sous la forme d'un tube radiant.
- Le moyen de chauffage du gaz est placé en sortie de la turbine radiale, ledit moyen de chauffage débouchant ou étant disposé dans lesdits moyens de recirculation.
- Les moyens de recirculation comprennent des moyens de distribution en communication de gaz avec la sortie de la turbine et adaptés pour répartir le flux de gaz évacué sur au moins une partie de la longueur du compartiment central, lesdits moyens de distribution étant hermétiquement prolongés par au moins un conduit de soufflage latéral disposé le long d'une paroi latérale du compartiment central, et ledit conduit de soufflage débouchant sur un orifice d'entrée du compartiment central.
- Les moyens de recirculation comprennent un divergent en communication de gaz avec la sortie de la turbine, hermétiquement prolongé par au moins un conduit de soufflage latéral disposé le long d'une paroi latérale du compartiment central, ledit conduit de soufflage débouchant sur un orifice d'entrée du compartiment central.
- Un conduit d'extraction, de préférence convergent, relie verticalement l'orifice de sortie des gaz à une entrée de turbine.
- Le dispositif de chauffage et de recirculation comprend une unique turbine radiale agencée au centre de la paroi supérieure ou de la paroi inférieure du compartiment central et en regard d'un unique orifice de sortie du gaz chaud.
- Le dispositif de chauffage et de recirculation comprend deux turbines radiales, de préférence agencées selon une symétrie centrale par rapport à la paroi supérieure ou la paroi inférieure du compartiment central.
- Le dispositif de chauffage et de recirculation comprend deux turbines radiales et chaque turbine est reliée à des moyens séparés de recirculation dont :
   - un premier conduit de soufflage en communication de fluide avec une première turbine radiale, ledit conduit de soufflage étant disposé sur une première paroi latérale du compartiment et débouchant sur un premier orifice d'entrée pratiqué sur ladite première paroi latérale,
   - un second conduit de soufflage en communication de fluide avec la seconde turbine radiale, ledit conduit de soufflage étant disposé sur la paroi latérale opposée du compartiment et débouchant sur un premier orifice d'entrée pratiqué sur ladite paroi latérale opposée.
   - Selon une configuration préférée d'un tel mode :
      - le premier orifice d'entrée, sur lequel débouche le premier conduit de soufflage, a une longueur sensiblement égale à la moitié de celle du compartiment central,
      - le second orifice d'entrée, sur lequel débouche le second conduit de soufflage, a une longueur sensiblement égale à la moitié de celle du compartiment central,
      - les deux orifices couvrent ensemble sensiblement la totalité de la longueur du compartiment central,
      - les deux orifices sont en position décalée sur les parois latérales opposées.
      - Selon certaines configurations, le premier orifice d'entrée a une longueur comprise entre 0,4 et 0,6 fois la longueur du compartiment central, le second orifice d'entrée a une longueur comprise entre 0,4 et 0,6 fois la longueur du compartiment central, les deux orifices couvrent ensemble au moins 0,8 fois la longueur du compartiment central et les deux orifices sont en position décalée sur les parois latérales opposées.
   - Une ouverture de dérivation (bypass) du gaz chaud est ménagée entre le compartiment central et au moins un conduit de soufflage.

La présente invention a également pour objet un caisson tel que décrit précédemment comprenant notamment :
- un compartiment central délimité par des parois latérales, supérieure et inférieure,
- des sas d'entrée et de sortie dimensionnés pour le passage d'un matelas de fibres, comprenant dans le compartiment central des orifices d'entrée et de sortie d'un flux de gaz chaud situés de part et d'autre du matelas de fibres,
ledit caisson comprenant en outre un dispositif intégré de chauffage et de recirculation du gaz chaud dont :
- au moins une turbine radiale montée horizontalement sur la paroi supérieure ou la paroi inférieure du compartiment central, dont l'axe de rotation est disposé verticalement, ladite turbine aspirant le gaz chaud selon ledit axe au travers d'un orifice de sortie du gaz du compartiment central et le rejetant radialement vers des moyens de recirculation,
- des moyens de recirculation du gaz en sortie de la turbine radiale jusqu'à l'orifice d'entrée du gaz dans le compartiment, disposés au moins pour partie sur au moins une paroi latérale du compartiment,
- au moins un dispositif de chauffage de l'air circulant dans ledit caisson.

L'invention a enfin pour objet une ligne de fabrication comprenant une étuve telle que décrits précédemment. C'est notamment une ligne de fabrication d'un matelas continu de fibres minérales et/ou végétales, comprenant au moins une unité de fibrage d'un matelas continu de fibres minérales et/ou végétales, un convoyeur de transport du matelas et une étuve telle que décrite précédemment.

Une telle ligne de fabrication peut comprendre en outre des moyens de façonnage du matelas en panneaux et/ou en rouleaux.

L'invention sera mieux comprise à la lecture de la description qui va suivre, fournie uniquement à titre d'exemple et faite en se référant aux dessins annexés sur lesquels :
- la figure 1 décrit une installation actuelle de fibrage d'un matelas en laine minérale, incorporant une étuve de réticulation ;
- la figure 2 est une vue schématique en coupe et plus détaillée d'une étuve actuelle de réticulation comprenant une pluralité de caissons indépendants de chauffage ;
- la figure 3 est une vue schématique en perspective d'un caisson de chauffage conforme à la présente invention et comportant une unique turbine radiale ;
- les figures 4 et 4 bis illustrent schématiquement le fonctionnement du caisson selon la figure 3 au sein d'une étuve selon l'invention ; et
- les figures 5 et 5 bis illustrent un deuxième exemple d'un autre caisson selon l'invention, comportant cette fois deux turbines radiales au sein d'une étuve selon l'invention.

Dans toutes ces figures, une même numérotation désigne des éléments identiques ou remplissant une même fonction au sein de l'étuve.

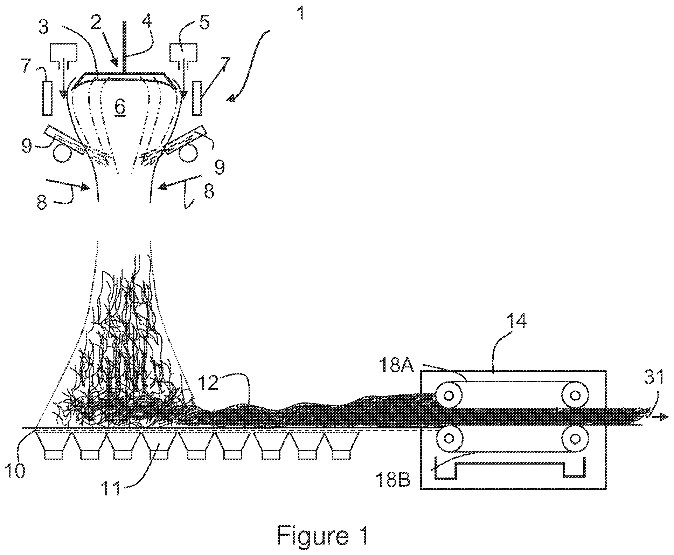

La figure 1 représente les premières étapes d'une ligne de production de d'un matelas continu de fibres minérales, plus particulièrement à base de laine de verre, étant entendu que la ligne est de tout type adapté pour la production de produits à base de fibres minérales et éventuellement végétales.

A titre d'exemple pour la laine de verre, la ligne comporte une unité de fibrage 1, par exemple conforme au procédé de fibrage par centrifugation interne. L'unité de fibrage comporte une hotte (non représentée sur la figure 1) surmontée d'au moins un centrifugeur 2. Chaque centrifugeur comprend un panier (non représenté sur la figure 1) pour la récupération d'un filet de verre de fibrage préalablement fondu et une pièce 3 en forme d'assiette dont la paroi périphérique est munie d'un grand nombre d'orifices. En fonctionnement, le verre fondu, amené en un filet 4 depuis un four de fusion (non représenté) et d'abord récupéré dans le panier du centrifugeur, s'échappe par les orifices de l'assiette 3 sous la forme d'une multitude de filaments entraînés en rotation. Le centrifugeur 2 est par ailleurs entouré par un brûleur annulaire 5 qui crée à la périphérie de la paroi du centrifugeur un courant gazeux à grande vitesse et à température suffisamment élevée pour étirer les filaments de verre en fibres sous la forme d'un voile 6.

Des moyens de chauffage 7 par exemple du type inducteurs servent à maintenir le verre et le centrifugeur à la bonne température. Le voile 6 est refermé par un courant gazeux d'air introduit sous pression, schématisé par les flèches 8. Le tore 6 ainsi créé est entouré par un dispositif de pulvérisation de l'encollage contenant un liant thermodurcissable en solution aqueuse, dont seuls deux éléments 9 sont représentés sur la figure 1.

Il s'agit par exemple d'un liant phénolique ou un liant alternatif à faible teneur en formaldéhyde, de préférence même sans formaldéhyde, liants parfois qualifiés de «liants verts», notamment lorsqu'ils sont au moins partiellement issus d'une base de matière première renouvelable, en particulier végétale, notamment du type à base de sucres hydrogénés ou non.

Le fond de la hotte de fibrage est constitué par un dispositif de réception des fibres comprenant un convoyeur incorporant une bande sans fin 10 perméable aux gaz et à l'eau, sous laquelle sont disposés des caissons d'aspiration 11 des gaz tels que l'air, les fumées et les compositions aqueuses excédentaires issues du processus de fibrage précédemment décrit. Il se forme ainsi sur la bande 10 du convoyeur un matelas 12 de fibres de laine de verre mélangées intimement avec la composition d'encollage. Le matelas 12 est conduit par le convoyeur 10 jusqu'à une étuve 14 de réticulation du liant thermodurcissable.

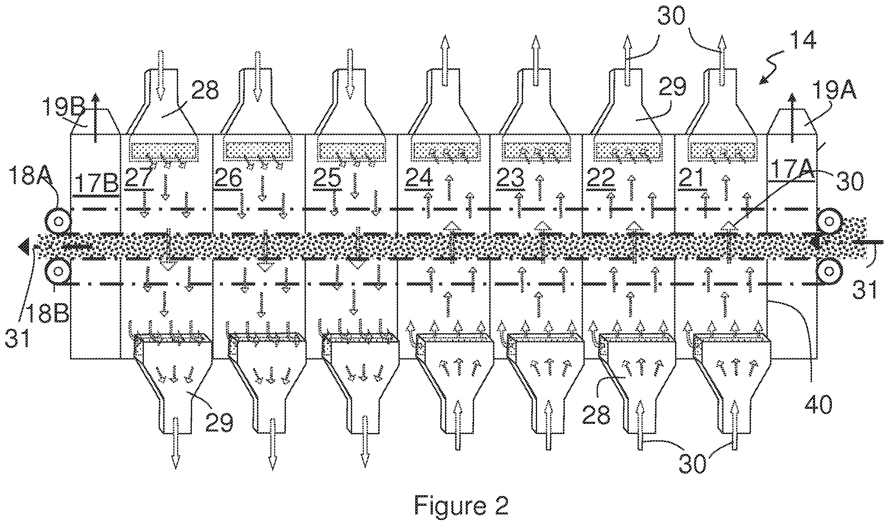

Comme représenté sur la figure 2, cette étuve 14 comprend une série de caissons séparés par les uns des autres par des parois isolantes.

L'enceinte est normalement traversée par deux convoyeurs 18A, 18B de transport et de calibrage du matelas 12. Ces convoyeurs sont par exemple mis en rotation par des moteurs placés au sol (non représentés sur la figure 1), et sont constitués de façon bien connue par une succession de palettes constituées de grilles articulées entre elles et perforées pour être perméables aux gaz.

Tout en assurant le passage des gaz chauds favorisant la prise rapide du liant, les convoyeurs 18 compriment habituellement le matelas 12 pour lui donner l'épaisseur souhaitée. A titre d'exemple, pour un panneau roulé, celle-ci est typiquement comprise entre 10 et 450 mm, la densité de la couche de laine de verre étant par exemple comprise entre 5 et 150 kg/m³. On distingue ainsi par exemple les produits dits de faible densité, pour lesquels la masse volumique varie entre 5 et 20 kg/m³ et les produits dits de forte densité, dans lesquels la densité varie entre 20 et 150 kg/m³.

La figure 2 décrit plus en détail la structure d'une étuve connue de réticulation 12. L'étuve représentée sur la figure 2, sans que cela puisse être considéré comme limitatif de la portée de la présente invention, comprend sept caissons 21-27 indépendants.

Le matelas de laine minérale aspergé de liant entre d'abord dans un sas 17A d'entrée pourvu d'une hotte 19A d'évacuation des fumées, ces hottes étant reliées à un circuit dédié de traitement desdites fumées (non représenté sur les figures). Dans ce premier sas d'entrée 17A, l'air chaud introduit dans le matelas permet en premier lieu la vaporisation de l'eau résiduelle présente dans le matelas de fibres.

Dans les premiers caissons, par exemple les caissons 21-24, l'air chaud est introduit par le bas de l'étuve et évacué par le haut, après traversée du matelas. Dans les caissons suivants, par exemple les caissons 25-27, l'air chaud est cette fois introduit par le haut de l'étuve et évacué par le bas.

Sur toutes les figures, la circulation de l'air dans l'étuve est représentée par des flèches 30. Le sens de circulation du matelas est indiqué par les flèches 31. Bien entendu, chaque caisson est pourvu de d'ouverture ou de sas d'entrée et de sortie dimensionnés pour le passage du matelas de fibres.

L'utilisation d'une pluralité de caissons permet la montée en température progressive du matelas de fibres jusqu'à une température supérieure à la température de durcissement du liant présent sur les fibres du matelas. Du parfait contrôle de la température dans les différents caissons dépendent les propriétés mécaniques du produit final, notamment si un liant vert est utilisé, comme indiqué précédemment.

Les fumées supplémentaires générées dans les caissons sont généralement évacuées dans un sas de sortie 17B, via une hotte 19B.

Chaque caisson 21-27 comprend un compartiment central 40 entouré par un matériau d'isolation, généralement en laine de verre, le compartiment central étant entouré par une enceinte métallique externe. On délimite ainsi une enveloppe d'isolation extérieure de l'étuve entourant la pluralité de caisson (non représentée sur la figure 2). L'enceinte de chaque caisson délimite un compartiment central 40. Au niveau de chaque caisson l'air chaud est introduit via un système de hotte d'entrée et de sortie (28, 29) disposées au-dessus et en dessous de l'enceinte. Dans un tel système classique, le système de génération d'air chaud (bruleur, ventilateur, hotte) est disposé à l'extérieur de l'enveloppe d'isolation extérieure de l'étuve, ce qui génère non seulement un encombrement maximal de l'installation dans sa totalité mais également de très fortes déperditions d'énergie.

Bien que non représenté sur la figure 2, une étuve comprend habituellement une enveloppe d'isolation extérieure entourant l'ensemble des caissons de l'étuve, faite dans un matériau isolant telle que la laine minérale. Le plus souvent, cette enveloppe d'isolation extérieure entoure elle-même une première enceinte métallique permettant d'assurer l'étanchéité de l'ensemble de l'installation, de telle manière que les gaz pollués ne puissent être évacués en sortie du dispositif que par les hottes 19B et 19A.

Comme indiqué précédemment l'objet de la présente invention est de réduire la consommation d'énergie des étuves actuelles.

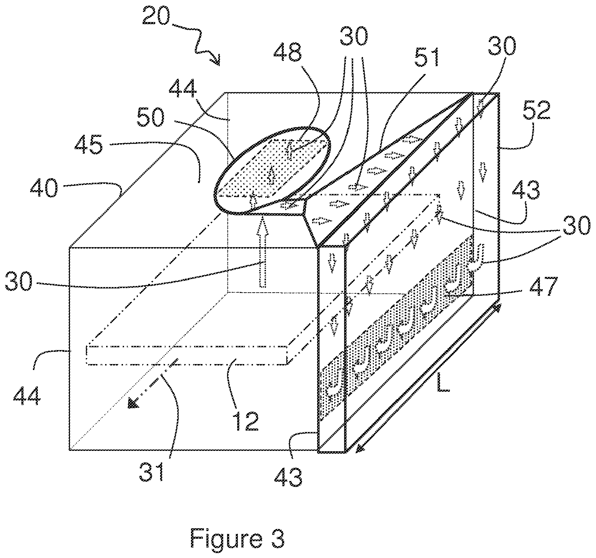

A cet effet, un objet de l'invention est une étuve telle qu'elle va être maintenant décrite en relation avec les figures 3 à 5, sans bien entendu que ladite invention ne soit restreinte à ces seules réalisations.

Dans une étuve selon l'invention, on met en oeuvre un dispositif compact combinant chauffage, soufflage et conduits d'alimentation réduits au strict minimum, minimisant ainsi les pertes de charge tout en améliorant l'efficacité du soufflage.

En particulier, pour obtenir un tel résultat et selon une caractéristique essentielle de la présente invention, la présente étuve comprend au moins un caisson qui intègre un dispositif spécifique de génération et de circulation du courant de gaz chaud permettant le durcissement progressif du liant. De préférence la totalité des caissons d'une étuve selon l'invention sont construits selon ce mode.

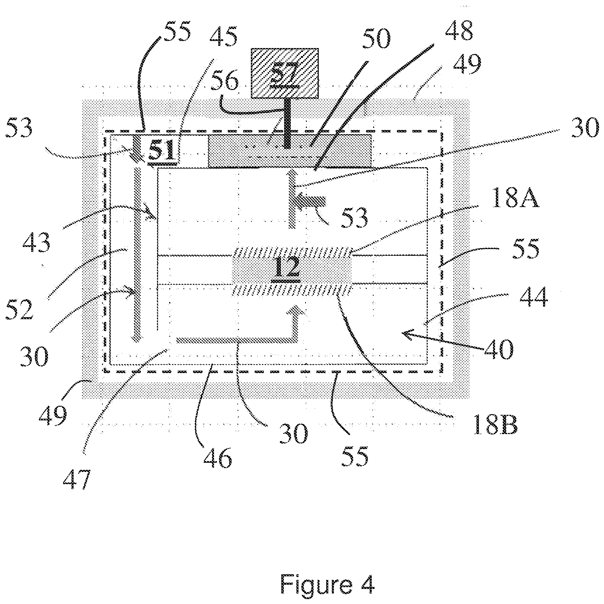

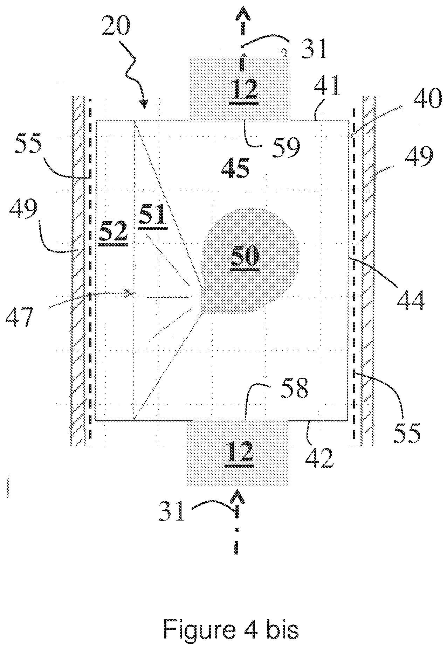

Les principes de fonctionnement et certaines caractéristiques structurales d'une étuve/d'un caisson selon l'invention sont décrits plus en détail et de façon non limitative par la suite, à l'aide des figures 3, 4, 4bis, 5 et 5bis.

Sur la figure 3 on a représenté plus en détail et de façon schématique en élévation un caisson 20 selon une première réalisation de l'invention.

Des ouvertures ou orifices 47 et 48 sont pratiquées de part et d'autre du compartiment central 40 du caisson comme il est visible sur la figure 3. L'orifice 47 permet l'introduction dans le compartiment 40 du gaz chaud pour la réticulation du liant et l'orifice 48 permet la sortie du gaz chaud après la traversée du matelas de fibres.

Sur la paroi supérieure 45 du compartiment central 40, en regard de l'orifice de sortie 48 des gaz chaud, est disposé une turbine radiale 50, de telle façon que son axe de rotation soit disposé sensiblement verticalement. Le boîtier de la turbine 50 peut soit être fixé directement sur la paroi 45 ou alternativement être relié à l'orifice de sortie 48 via une conduite d'extraction (non représentée sur la figure 3).

Cette turbine est ainsi placée sur le compartiment 40 de telle manière qu'elle aspire le gaz au travers de l'orifice de sortie 48 du gaz, après traversée du matelas 12. Le gaz (en principe initialement l'air) est rejeté de la turbine selon une direction radiale comme schématisé par les flèches 30, vers des moyens de recirculation en boucle comprenant par exemple un divergent 51 relié hermétiquement à la sortie de la turbine et un conduit de soufflage latéral 52 répartissant ensuite le gaz évacué sur toute la longueur L du caisson. Le divergent 51 est hermétiquement prolongé par un conduit de soufflage latéral 52, disposé le long et avantageusement sur toute la surface d'une paroi latérale 43 du compartiment central 40. Une telle configuration permet de réduire considérablement l'encombrement du conduit de soufflage latéral 52, qui peut alors être de faible épaisseur. De préférence également, la section du conduit 52 est rectangulaire. De façon optionnelle, le conduit 52 est pourvu de parois internes de guidage, pour une meilleure répartition du flux dans le conduit, et lors de sa réintroduction dans le compartiment 40 via l'orifice 47.

Le conduit de soufflage latéral 52 débouche sur un orifice d'entrée 47 du compartiment central, qui s'étend de préférence sur toute la longueur du compartiment 40. L'air chaud est ainsi réintroduit dans le compartiment 40 en-dessous du matelas de fibres 12 et amené à le traverser de nouveau sous l'effet de la dépression créée sur sa face opposée par la turbine 50.

Sur la figure 4, on a décrit une vue de côté, selon une coupe en son milieu du caisson de la figure 3, pour en illustrer plus avant le fonctionnement. Sur la figure 4, d'autres éléments sont représentés, en particulier :
- l'enveloppe d'isolation extérieure 49,
- une enceinte métallique externe 55,
- un moyen de chauffage 53, disposé soit à l'intérieur du compartiment 40, soit en aval de la turbine 50, dans le sens de circulation des gaz chauds comme décrit précédemment,
- les bandes sans fin et perméables aux gaz des deux convoyeurs 18A, 18B de transport et de calibrage du matelas 12
- le moteur d'entrainement 57 de la turbine radiale, disposé à l'extérieur de l'enceinte et au-dessus de l'enveloppe d'isolation extérieure 49, ainsi que l'arbre d'entrainement 56 reliant ledit moteur à la turbine.

Sur la figure 4, pour mieux comprendre le fonctionnement de l'invention, on a représenté une enveloppe d'isolation extérieure 49 entourant l'ensemble des caissons 20 de l'étuve. Le plus souvent, l'enveloppe d'isolation extérieure entoure elle-même une première enceinte métallique externe 55 entourant l'ensemble de l'étuve, cette enceinte étant montée et soudée pour assurer l'étanchéité de l'ensemble de l'installation.

Au sein du compartiment 40, des moyens de chauffage 53 sont également prévus selon l'invention (représentés uniquement sur les figures 4 et 4bis), qui permettent de maintenir les gaz chauds à la température requise pour assurer le durcissement du lien dans les conditions optimales requises au sein de chaque caisson. De tels moyens de chauffage peuvent par exemple être placés dans le compartiment central 40, entre le matelas de fibres 12 et l'orifice de sortie 48 du gaz chaud. Ce peut être en particulier et de préférence un tube radiant. Selon une autre réalisation possible, le moyen de chauffage peut être placé en sortie de la turbine radiale 50, notamment dans le conduit de soufflage latéral 52. Là encore, ce moyen peut être avantageusement un tube radiant ou un brûleur.

La figure 4bis schématise cette fois une vue du dessus du caisson 20 déjà représenté sur les figures 3 et 4, entouré de l'enceinte métallique 55 et de l'enveloppe d'isolation extérieure 49 de l'étuve. Le matelas de fibres 12, véhiculé par les convoyeurs 18A et 18B est introduit dans le compartiment central 40 via une ouverture ou un sas d'entrée 58 et en ressort après l'avoir traversé via une ouverture ou un sas de sortie 59.

De préférence, selon une telle configuration ne comprenant qu'une seule turbine 50, celle-ci est placé en position centrale sur le caisson 40. La turbine 50 comprend bien entendu un boitier l'entourant de manière étanche à l'air. Il a une forme de tout type adapté pour que la turbine produise un effet d'aspiration à l'entrée du boîtier et de soufflage à la sortie du boîtier.

Le dispositif intégré de chauffage et d'extraction, de préférence compris dans chaque caisson d'une étuve selon l'invention, comprend, outre la turbine radiale 50, des moyens de recirculation des gaz chauds en sortie de ladite turbine, permettant de réinjecter celui-ci sur la face opposée du matelas de laine minérale, par référence à l'orifice de sortie 48 desdits gaz. Les moyens de recirculation illustrés sur les figures 3 à 5 comprennent avantageusement un divergent 51 et un conduit de soufflage latéral 52 mais tout autre moyen connu peut bien entendu être envisagé sans sortir du cadre de l'invention, permettant d'acheminer lesdits gaz depuis la sortie de la turbine 50 jusqu'à l'orifice 47 d'entrée des gaz dans le compartiment 40.

Selon ce mode, le dispositif intégré de chauffage et d'extraction aspire ainsi les gaz chauds d'un côté du matelas et les réinjectent du côté opposé du compartiment, de façon à produire un flux vertical ascendant de gaz chauds à travers le matelas.

Egalement, on a représenté sur les figures une configuration selon laquelle la turbine 50 est disposée au-dessus du compartiment 40, c'est-à-dire dans la partie haute du caisson. Il est bien évident que selon l'invention, la turbine peut également être positionnée cette fois en-dessous du compartiment 40, c'est-à-dire dans la partie basse du caisson. Dans un tel cas, l'orifice de sortie 48 du flux de gaz chaud 30 est alors pratiqué dans la paroi inférieure 46 du compartiment central 40 et la turbine est montée sur la paroi inférieure 46 du compartiment central, l'entrée de la turbine étant agencée en regard de l'orifice de sortie 48 du gaz chaud. Selon une telle configuration, les moyens de recirculation décrits plus haut permettent cette fois d'acheminer lesdits gaz depuis la sortie de la turbine 50 jusqu'à l'orifice 47 d'entrée des gaz dans le compartiment 40, ledit orifice 47 d'entrée des gaz étant alors pratiqué dans la partie haute du compartiment 40 pour permettre la recirculation desdits gaz et la traversée du matelas 12 par lesdits gaz selon un flux descendant. Selon cette variante, la turbine 50 est donc disposée sous le compartiment 40 et l'extraction des gaz chaud est pratiquée du côté inférieur du caisson, tandis que les gaz chauds sont réintroduits dans le compartiment selon un côté supérieur du caisson. L'ensemble du dispositif de chauffage et d'extraction apparait ainsi identique à celui décrit précédemment mais disposé de façon inversée.

Tel que décrit précédemment, le dispositif de chauffage et d'extraction selon l'invention forme ainsi un circuit de recirculation intégré des gaz chauds permettant la réticulation du liant, ce qui limite les pertes thermiques et la consommation énergétique.

Comme illustré par la figure 2, les quatre premiers caissons sont par exemple configurés pour produire un flux de gaz chauds ascendant tandis que les trois caissons suivants sont configurés pour produire un flux de gaz chauds descendant, selon les principes précédemment décrits. En variante, une alternance de flux ascendant/descendant dans les différents caissons est également possible selon l'invention.

Selon l'invention, en règle générale, chaque dispositif de chauffage 53 est indépendant et comprend des moyens de contrôle de la température et du débit des gaz chauds. Le dispositif de chauffage est par exemple configuré pour produire un flux de gaz chaud dont la température, lors de la traversée du matelas de fibres 12, est comprise entre 200°C et 250°C, la température dépendant bien entendu du type de liant utilisé. D'autres caissons pourront être réglés à des températures différentes. Concernant le débit, le dispositif est par exemple configuré pour que la turbine produise un débit de gaz de l'ordre de 1000 à 60000 m³/h.

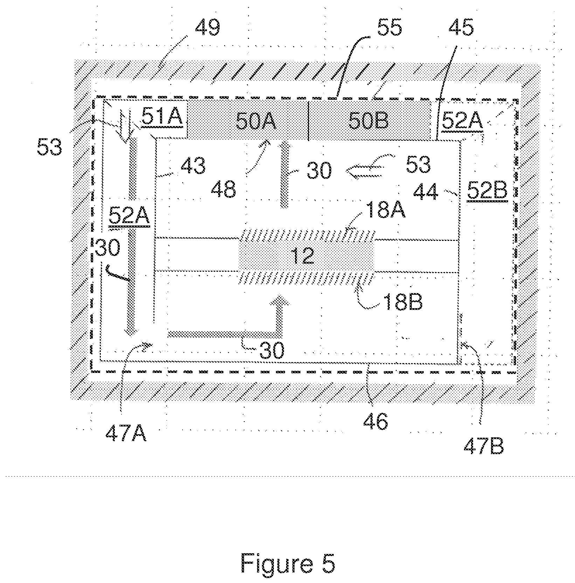

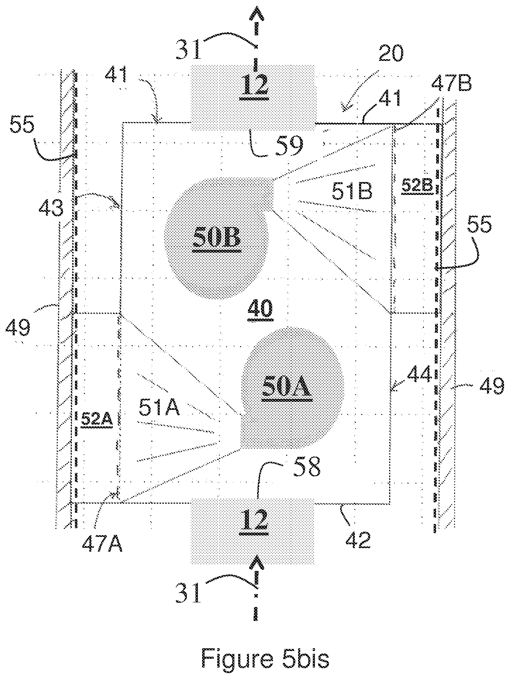

Les figures 5 et 5bis illustrent un autre exemple de réalisation de l'invention dans lequel le caisson comprend deux dispositifs de chauffage et de recirculation, incluant deux turbines radiales distinctes 50A et 50B, les deux turbines étant agencées entre elles selon une symétrie centrale sur le compartiment central du caisson. Le caisson comprend ainsi deux circuits de gaz chaud, le premier circuit occupant une premier moitié de la longueur de la chambre principale tandis que le deuxième circuit occupe la deuxième moitié.

Selon une telle configuration chaque turbine 50A, 50B est reliée à des moyens séparés de recirculation dont respectivement :
- un premier conduit de soufflage 51A en communication de fluide avec la première turbine radiale 50A, ledit conduit de soufflage 51A étant disposé sur une première paroi latérale 43 du compartiment et débouchant sur un premier orifice d'entrée 47A pratiqué sur ladite première paroi latérale 43,
- un second conduit de soufflage 51B en communication de fluide avec la seconde turbine radiale 50B, ledit conduit de soufflage 51B étant disposé sur la paroi latérale 44 opposée du compartiment 40 et débouchant sur un second orifice d'entrée 47B pratiqué sur ladite paroi latérale opposée 44.

Comme représenté sur les figures 5 et 5bis, le premier orifice d'entrée 47A, sur lequel débouche le premier conduit de soufflage latéral 52A, a par exemple une longueur sensiblement égale à la moitié de celle du compartiment central 40,et le second orifice d'entrée 47B, sur lequel débouche le second conduit de soufflage latéral 52B, a une longueur sensiblement égale à la moitié de celle du compartiment central 40.

De préférence, les deux orifices couvrent ensemble sensiblement la totalité de la longueur du compartiment central 40. Selon une autre configuration avantageuse représenté sur les figures 5 et 5bis, les deux orifices 47A, 47B sont en position décalée sur les parois latérales 42, 44 opposées.

## Revendications

1. Caisson (20) pour une étuve de réticulation d'un matelas (12) continu de fibres minérales ou végétales, comprenant un compartiment central (40) délimité par des parois latérales (41-44), supérieure (45) et inférieure (46), des sas d'entrée et de sortie dimensionnés pour le passage d'un matelas de fibres, comprenant dans le compartiment central (40) des orifices d'entrée (47) et de sortie (48) d'un flux de gaz chaud (30) situés de part et d'autre du matelas de fibres, ledit caisson étant **caractérisé en ce qu'**il comprend en outre un dispositif intégré de chauffage et de recirculation du gaz chaud dont :
- au moins une turbine radiale (50) montée horizontalement sur la paroi supérieure (45) ou la paroi inférieure (46) du compartiment central (40) et dont l'axe de rotation est disposé verticalement, ladite turbine aspirant le gaz chaud selon ledit axe au travers d'un orifice de sortie (48) du gaz du compartiment central (40) et le rejetant radialement vers des moyens de recirculation (51 , 52),
- des moyens de recirculation du gaz en sortie de la turbine radiale (50) jusqu'à l'orifice d'entrée (47) du gaz dans le compartiment (40), disposés au moins pour partie sur au moins une paroi latérale (43, 44) du compartiment,
- au moins un dispositif de chauffage (53) de l'air circulant dans ledit caisson (20).

2. Etuve de réticulation d'un matelas (12) continu de fibres minérales ou végétales, comprenant :
- une pluralité de caissons de chauffage (20) tels que dans la revendication 1 traversés successivement par ledit matelas de fibres (12), lesdits caissons comprenant chacun un compartiment central (40) délimité par des parois latérales (41-44), supérieure (45) et inférieure (46), ledit compartiment comprenant des orifices d'entrée (47) et de sortie (48) d'un flux de gaz chaud (30) situés de part et d'autre du matelas de fibres, de telle façon qu'après traversée du matelas par le flux de gaz chaud, le liant soit progressivement amené à une température supérieure à sa température de durcissement,
- au moins un convoyeur (18A, 18B) de transport du matelas à travers les différents caissons (20), ledit convoyeur étant perméable au flux de gaz chaud traversant ledit matelas,
- une enveloppe d'isolation extérieure (49) entourant ladite pluralité de caisson, ladite étuve étant **caractérisée en ce qu'**au moins l'un desdits caissons comprend en outre, entre l'enveloppe d'isolation extérieure (49) et ledit compartiment central (40), un dispositif intégré de chauffage et de recirculation de gaz chaud comprenant :
- au moins une turbine radiale (50) montée horizontalement sur la paroi supérieure (45) ou la paroi inférieure (46) du compartiment central (40), dont l'axe de rotation est disposé verticalement, ladite turbine aspirant le gaz chaud selon ledit axe au travers d'un orifice de sortie (48) du gaz du compartiment central (40) après traversée du matelas (12), et le rejetant radialement vers des moyens de recirculation (51, 52),
- des moyens de recirculation (51, 52) du gaz chaud en sortie de la turbine radiale (50) jusqu'à un orifice d'entrée (47) du gaz dans le compartiment (40), lesdits moyens de recirculation étant disposés au moins pour partie sur au moins une paroi latérale (43, 44) du compartiment,
- au moins un moyen de chauffage (53) du gaz circulant dans ledit caisson.

3. Etuve selon la revendication 2, dans laquelle le ou les orifices de sortie (48) du flux de gaz chaud (30) sont pratiqués dans la paroi supérieure (45) du compartiment central (40) et dans laquelle la ou les turbines (50) sont montées sur la paroi supérieure (45) du compartiment central (40), l'entrée d'une turbine étant placée en regard d'un orifice de sortie (48) du gaz chaud.

4. Etuve selon la revendication 2, dans laquelle le ou les orifices de sortie (48) du flux de gaz chaud (30) sont pratiqués dans la paroi inférieure (46) du compartiment central (40) et dans laquelle la ou les turbines (50) sont montées sur la paroi inférieure (46) du compartiment central, l'entrée d'une turbine étant agencée en regard d'un orifice de sortie (48) du gaz chaud.

5. Etuve selon l'une quelconque des revendications 2 à 4, dans laquelle le moyen de chauffage (53) est intégré ou débouche dans ledit caisson (20).

6. Etuve selon l'une quelconque des revendications 2 à 5, dans laquelle le moyen de chauffage (53) du gaz est placé dans le compartiment central (40) entre le matelas de fibres (12) et l'orifice de sortie (48) du gaz chaud, et de préférence est sous la forme d'un tube radiant.

7. Etuve selon l'une quelconque des revendications 2 à 6, dans laquelle le moyen de chauffage (53) du gaz est placé en sortie de la turbine radiale (50), ledit moyen de chauffage débouchant ou étant disposé dans lesdits moyens de recirculation (52).

8. Etuve selon l'une quelconque des revendications 2 à 7, dans laquelle les moyens de recirculation comprennent un divergent (51) en communication de gaz avec la sortie de la turbine (50), hermétiquement prolongé par au moins un conduit de soufflage latéral (52) disposé le long d'une paroi latérale (43) du compartiment central (40), ledit conduit de soufflage (52) débouchant sur un orifice d'entrée (47) du compartiment central.

9. Etuve l'une quelconque des revendications 2 à 8, dans laquelle un conduit d'extraction, de préférence convergent, relie verticalement un orifice de sortie (48) des gaz à une entrée de turbine (50).

10. Etuve selon l'une quelconque des revendications 2 à 9, dans laquelle le dispositif de chauffage et de recirculation comprend une unique turbine radiale (50) agencée au centre de la paroi supérieure (45) ou de la paroi inférieure (46) du compartiment central (40) et en regard d'un unique orifice de sortie (48) du gaz chaud.

11. Etuve selon l'une quelconque des revendications 2 à 8, dans laquelle le dispositif de chauffage et de recirculation comprend deux turbines radiales (50A, 50B), de préférence agencées selon une symétrie centrale par rapport à la paroi supérieure (45) ou la paroi inférieure (46) du compartiment central.

12. Etuve selon la revendication précédente, dans laquelle chaque turbine (50A, 50B) est reliée à des moyens séparés de recirculation dont :
- un premier conduit de soufflage (51A) en communication de fluide avec une première turbine radiale (50A), ledit conduit de soufflage (51A) étant disposé sur une première paroi latérale (43) du compartiment et débouchant sur un premier orifice d'entrée (47A) pratiqué sur ladite première paroi latérale (43),
- un second conduit de soufflage (51B) en communication de fluide avec la seconde turbine radiale (50B), ledit conduit de soufflage (51A) étant disposé sur la paroi latérale (44) opposée du compartiment (40) et débouchant sur un premier orifice d'entrée (47B) pratiqué sur ladite paroi latérale opposée (44).

13. Etuve selon la revendication précédente, dans laquelle :
- le premier orifice d'entrée (47A), sur lequel débouche le premier conduit de soufflage (52A), a une longueur comprise entre 0,4 et 0,6 fois la longueur du compartiment central (40),
- le second orifice d'entrée (47B), sur lequel débouche le second conduit de soufflage (52B), a une longueur comprise entre 0,4 et 0,6 fois la longueur du compartiment central (40),
- les deux orifices couvrent ensemble au moins 0,8 fois la longueur du compartiment central (40),
- les deux orifices (47A, 47B) sont en position décalée sur les parois latérales (43, 44) opposées.

14. Etuve selon l'une quelconque des revendications 2 à 13 dans laquelle une ouverture de dérivation (bypass) du gaz chaud est ménagée entre le compartiment central et au moins un conduit de soufflage.

15. Ligne de fabrication d'un matelas continu de fibres minérales et/ou végétales, comprenant au moins une unité de fibrage d'un matelas continu de fibres minérales et/ou végétales, un convoyeur de transport du matelas et une étuve selon l'une quelconque des revendications 2 à 14.

## Patentansprüche

1. Gehäuse (20) für einen Aushärtungsofen zur Vernetzung einer kontinuierlichen Matte (12) aus anorganischen oder pflanzlichen Fasern, umfassend eine zentrale Kammer (40), die durch seitliche (41-44), obere (45) und untere (46) Wände begrenzt wird, Ein- und Austrittsschleusen, die für den Durchgang einer Fasermatte bemessen sind, umfassend in der zentralen Kammer (40) Eintritts- (47) und Austrittsöffnungen (48) für einen heißen Gasstrom (30), die sich auf beiden Seiten der Fasermatte befinden, wobei das Gehäuse **dadurch gekennzeichnet ist, dass** es ferner eine integrierte Heiz- und Rückführvorrichtung für heißes Gas umfasst, die Folgendes umfasst:
- mindestens eine radiale Turbine (50), die horizontal an der oberen Wand (45) oder der unteren Wand (46) der zentralen Kammer (40) montiert ist und deren Drehachse vertikal angeordnet ist, wobei die Turbine das heiße Gas entlang der Achse durch eine Austrittsöffnung (48) für Gas der zentralen Kammer (40) ansaugt und es radial zu Mitteln zum Rückführen (51, 52) abgibt,
- Mittel zum Rückführen des Gases von der radialen Turbine (50) zur Gaseintrittsöffnung (47) in der Kammer(40), die mindestens teilweise auf mindestens einer Seitenwand (43, 44) der Kammer angeordnet sind,
- mindestens eine Heizvorrichtung (53) für Luft, die in dem Gehäuse zirkuliert (20).

2. Aushärtungsofen zur Vernetzung einer kontinuierlichen Matte (12) aus anorganischen oder pflanzlichen Fasern, umfassend:
- eine Vielzahl von Heizgehäusen (20) nach Anspruch 1, die nacheinander von der Fasermatte (12) durchlaufen werden, wobei die Gehäuse jeweils eine zentralen Kammer (40) umfassen, die durch seitliche (41-44), obere (45) und untere (46) Wände begrenzt wird, wobei die Kammer Eintritts- (47) und Austrittsöffnungen (48) für einen heißen Gasstrom (30) umfasst, die sich auf beiden Seiten der Fasermatte befinden, sodass nachdem der heiße Gasstrom die Matte durchquert hat, das Bindemittel allmählich auf eine Temperatur gebracht wird, die über seiner Aushärtungstemperatur liegt,
- mindestens eine Fördereinrichtung (18A, 18B) zum Transportieren der Matte durch die verschiedenen Gehäuse (20), wobei die Fördereinrichtung für den die Matte durchquerenden heißen Gasstrom durchlässig ist,
- eine äußere Isolierhülle (49), die die Vielzahl von Gehäusen umgibt, wobei der Ofen **dadurch gekennzeichnet ist, dass** mindestens eines der Gehäuse ferner zwischen der äußeren Isolierhülle (49) und der zentralen Kammer (40) eine integrierte Heiz- und Rückführvorrichtung für heißes Gas umfasst, die Folgendes umfasst:
- mindestens eine radiale Turbine (50), die horizontal an der oberen Wand (45) oder der unteren Wand (46) der zentralen Kammer (40) montiert ist, deren Drehachse vertikal angeordnet ist, wobei die Turbine das heiße Gas nach dem Durchqueren der Matte (12) entlang der Achse durch eine Gasaustrittsöffnung (48) der zentralen Kammer (40) ansaugt und es radial zu Mitteln zum Rückführen (51, 52) abgibt,
- Mittel zum Rückführen (51, 52) des aus der radialen Turbine (50) austretenden heißen Gases bis zu einer Gaseintrittsöffnung (47) in der Kammer (40), wobei die Mittel zum Rückführen mindestens teilweise auf mindestens einer Seitenwand (43, 44) der Kammer angeordnet sind,
- mindestens ein Mittel zum Heizen (53) des Gases, das in dem Gehäuse zirkuliert.

3. Ofen nach Anspruch 2, wobei die Austrittsöffnung(en) (48) für den heißen Gasstrom (30) in der oberen Wand (45) der zentralen Kammer (40) ausgeführt ist/sind, und wobei die Turbine(n) (50) an der oberen Wand (45) der zentralen Kammer (40) montiert ist/sind, wobei der Eintritt einer Turbine gegenüber einer Austrittsöffnung (48) für heißes Gas angeordnet ist.

4. Ofen nach Anspruch 2, wobei die Austrittsöffnung(en) (48) für den heißen Gasstrom (30) in der unteren Wand (46) der zentralen Kammer (40) ausgeführt ist/sind, und wobei die Turbine(n) (50) an der unteren Wand (46) der zentralen Kammer montiert ist/sind, wobei der Eintritt einer Turbine gegenüber einer Austrittsöffnung (48) für heißes Gas angeordnet ist.

5. Ofen nach einem der Ansprüche 2 bis 4, wobei das Mittel zum Heizen (53) in das Gehäuse (20) eingebaut ist oder in dieses mündet.

6. Ofen nach einem der Ansprüche 2 bis 5, wobei das Mittel zum Heizen (53) des Gases in der zentralen Kammer (40) zwischen der Fasermatte (12) und der Austrittsöffnung (48) für heißes Gas angeordnet ist und vorzugsweise in Form eines Strahlrohrs vorliegt.

7. Ofen nach einem der Ansprüche 2 bis 6, wobei das Mittel zum Heizen (53) von Gas am Austritt der radialen Turbine (50) angeordnet ist, wobei das Mittel zum Heizen in die Mittel zum Rückführen (52) mündet oder darin vorgesehen ist.

8. Ofen nach einem der Ansprüche 2 bis 7, wobei die Mittel zum Rückführen eine Expansionsdüse (51) in gasförmiger Verbindung mit dem Austritt der Turbine (50) umfassen, die hermetisch durch mindestens einen seitlichen Blaskanal (52) verlängert ist, der entlang einer Seitenwand (43) der zentralen Kammer (40) angeordnet ist, wobei der Blaskanal (52) an einer Eintrittsöffnung (47) der zentralen Kammer mündet.

9. Ofen nach einem der Ansprüche 2 bis 8, wobei ein, vorzugsweise konvergenter, Ablasskanal eine Gasaustrittsöffnung (48) vertikal mit einem Eintritt der Turbine (50) verbindet.

10. Ofen nach einem der Ansprüche 2 bis 9, wobei die Heiz- und Rückführvorrichtung eine einzige radiale Turbine (50) umfasst, die in der Mitte der oberen Wand (45) oder der unteren Wand (46) der zentralen Kammer (40) und gegenüber einer einzigen Austrittsöffnung (48) für heißes Gas angeordnet ist.

11. Ofen nach einem der Ansprüche 2 bis 8, wobei die Heiz- und Rückführvorrichtung zwei radiale Turbinen (50A, 50B) umfasst, die vorzugsweise gemäß einer zentralen Symmetrie in Bezug auf die obere Wand (45) oder die untere Wand (46) der zentralen Kammer angeordnet sind.

12. Ofen nach dem vorhergehenden Anspruch, wobei jede Turbine (50A, 50B) mit separaten Mitteln zum Rückführen verbunden ist, die Folgendes umfassen:
- einen ersten Blaskanal (51A) in fluider Verbindung mit einer ersten radialen Turbine (50A), wobei der Blaskanal (51A) an einer ersten Seitenwand (43) der Kammer vorgesehen ist und an einer ersten Eintrittsöffnung (47A) mündet, die auf der ersten Seitenwand (43) ausgeführt ist,
- einen zweiten Blaskanal (51B) in fluider Verbindung mit der zweiten radialen Turbine (50B), wobei der Blaskanal (51B) an der gegenüberliegenden Seitenwand (44) der Kammer (40) vorgesehen ist und an einer ersten Eintrittsöffnung (47B) mündet, die auf einer gegenüberliegenden Seitenwand (44) ausgeführt ist.

13. Ofen nach dem vorhergehenden Anspruch, wobei:
- die erste Eintrittsöffnung (47A), an der der erste Blaskanal (52A) mündet, eine Länge zwischen dem 0,4- und 0,6-Fachen der Länge der zentralen Kammer (40) aufweist,
- die zweite Eintrittsöffnung (47B), an der der zweite Blaskanal (52B) mündet, eine Länge zwischen dem 0,4- und 0,6-Fachen der Länge der zentralen Kammer (40) aufweist,
- die beiden Öffnungen zusammen mindestens das 0,8-Fache der Länge der zentralen Kammer (40) abdecken,
- die beiden Öffnungen (47A, 47B) sich in einer versetzten Position auf den gegenüberliegenden Seitenwänden (43, 44) befinden.

14. Ofen nach einem der Ansprüche 2 bis 13, wobei zwischen der zentralen Kammer und mindestens einem Blaskanal eine Umgehungsöffnung (Bypass) für heißes Gas vorgesehen ist.

15. Produktionslinie für eine kontinuierliche Matte aus anorganischen und/oder pflanzlichen Fasern, umfassend mindestens eine Einheit zum Ziehen von Fasern einer kontinuierlichen Matte aus anorganischen und/oder pflanzlichen Fasern, eine Fördereinrichtung zum Transportieren der Matte und einen Ofen nach einem der Ansprüche 2 bis 14.

## Claims

1. A box (20) for a drying oven for crosslinking a continuous mat (12) of mineral or plant fibers, comprising a central compartment (40) delimited by lateral (41-44), an upper (45) and a lower (46) walls, inlet and outlet locks sized for the passage of a mat of fibers, comprising, in the central compartment (40), inlet (47) and outlet (48) orifices for a stream of hot gas (30), these being situated on each side of the mat of fibers, said box being **characterized in that** it further comprises an in-built hot-gas heating and recirculation device comprising:
- at least one radial turbine (50) mounted horizontally on the upper wall (45) or the lower wall (46) of the central compartment (40), the axis of rotation of which is arranged vertically, said turbine drawing the hot gas along said axis through a gas outlet orifice (48) of the central compartment (40) and discharging it radially toward recirculation means (51, 52),
- recirculation means recirculating the gas leaving the radial turbine (50) to the gas inlet orifice (47) of the compartment (40), said recirculation means being arranged at least in part on at least one lateral wall (43, 44) of the compartment,
- at least one heating means (53) for heating the air circulating in said box (20).

2. A drying oven for crosslinking a continuous mat (12) of mineral or plant fibers, comprising:
- a plurality of heating boxes (20) such as in claim 1 through which said mat of fibers (12) successively passes, said boxes each comprising a central compartment (40) delimited by lateral (41-44), an upper (45) and a lower (46) walls, said compartment comprising inlet (47) and outlet (48) orifices for a stream of hot gas (30), which orifices are situated on each side of the mat of fibers, so that after the stream of hot gas has passed through the mat the binder is progressively raised to a temperature above its curing temperature,
- at least one conveyor (18A, 18B) for conveying the mat through the various boxes (20), said conveyor being permeable to the stream of hot gas passing through said mat,
- an external insulating jacket (49) surrounding said plurality of boxes,
said drying oven being **characterized in that** at least one of said boxes further comprises, between the external insulating jacket (49) and said central compartment (40), an in-built hot-gas heating and recirculation device comprising:
- at least one radial turbine (50) mounted horizontally on the upper wall (45) or the lower wall (46) of the central compartment (40), the axis of rotation of which is arranged vertically, said turbine drawing the hot gas along said axis through a gas outlet orifice (48) of the central compartment (40) after it has passed through the mat (12), and discharging it radially toward recirculation means (51, 52),
- recirculation means (51, 52) recirculating the hot gas leaving the radial turbine (50) to a gas inlet orifice (47) of the compartment (40), said recirculation means being arranged at least in part on at least one lateral wall (43, 44) of the compartment,
- at least one heating means (53) for heating the gas circulating in said box.

3. The drying oven as claimed in claim 2, in which the outlet orifice or orifices (48) for the stream of hot gas (30) are made in the upper wall (45) of the central compartment (40) and in which the turbine or turbines (50) are mounted on the upper wall (45) of the central compartment (40), the inlet of a turbine being positioned facing a hot-gas outlet orifice (48).

4. The drying oven as claimed in claim 2, in which the outlet orifice or orifices (48) for the stream of hot gas (30) are made in the lower wall (46) of the central compartment (40) and in which the turbine or turbines (50) are mounted on the lower wall (46) of the central compartment, the inlet of a turbine being arranged facing a hot-gas outlet orifice (48).

5. The drying oven as claimed in claims 2 to 4, in which the heating means (53) is inbuilt into or opens into said box (20).

6. The drying oven as claimed in claims 2 to 5, in which the gas heating means (53) is positioned in the central compartment (40) between the mat of fibers (12) and the hot-gas outlet orifice (48), and is preferably in the form of a radiant tube.

7. The drying oven as claimed in claims 2 to 6, in which the gas-heating means (53) is positioned at the outlet of the radial turbine (50), said heating means opening into or being situated in said recirculation means (52).

8. The drying oven as claimed in claims 2 to 7, in which the recirculation means comprise a divergent (51) in gaseous communication with the outlet of the turbine (50), and hermetically extended by at least one lateral blowing duct (52) situated along a lateral wall (43) of the central compartment (40), said blowing duct (52) opening onto an inlet orifice (47) of the central compartment.

9. The drying oven as claimed in claims 2 to 8, in which an extraction duct, preferably convergent, vertically connects a gas outlet orifice (48) to a turbine inlet (50).

10. The drying oven as claimed in claims 2 to 9, in which the heating and recirculation device comprises a single radial turbine (50) arranged at the center of the upper wall (45) or of the lower wall (46) of the central compartment (40) and facing a single hot-gas outlet orifice (48).

11. The drying oven as claimed in any one of claims 2 to 8, in which the heating and recirculation device comprises two radial turbines (50A, 50B), preferably arranged with central symmetry with respect to the upper wall (45) or the lower wall (46) of the central compartment.

12. The drying oven as claimed in the preceding claim, in which each turbine (50A, 50B) is connected to separate recirculation means namely:
- a first blowing duct (51A) in fluidic communication with a first radial turbine (50A), said blowing duct (51A) being situated on a first lateral wall (43) of the compartment and opening onto a first inlet orifice (47A) made on said first lateral wall (43),
- a second blowing duct (51B) in fluidic communication with the second radial turbine (50B), said blowing duct (51B) being situated on the opposite lateral wall (44) of the compartment (40) and opening onto a first inlet orifice (47B) made in said opposite lateral wall (44).

13. The drying oven as claimed in the preceding claim, in which:
- the first inlet orifice (47A), onto which the first blowing duct (52A) opens, has a length substantially equal to half that of the central compartment (40),
- the second inlet orifice (47B), onto which the second blowing duct (52B) opens, has a length substantially equal to half that of the central compartment (40),
- the two orifices together cover substantially all of the length of the central compartment (40),
- the two orifices (47A, 47B) are in offset positions on the opposite lateral walls (43, 44).

14. The drying oven as claimed in claims 2 to 13, in which a hot-gas bypass opening is formed between the central compartment and at least one blowing duct.

15. A production line for the manufacture of a continuous mat of mineral and/or plant fibers, comprising at least one fiberizing unit for producing a continuous mat of mineral and/or plant fibers, a conveyor for conveying the mat and a drying oven as claimed in any one of claims 2 to 14.
